# FASCICULE DE BREVET EUROPEEN

(11) **EP 3 824 212 B1**
(45) Date de publication et mention de la délivrance du brevet: **06.08.2025**
(21) Numéro de dépôt: 19740385.0
(22) Date de dépôt: 17.07.2019
(51) Int. Cl.: F16L 11/08, F16L 11/16, F16L 11/04

(54) **CONDUITE FLEXIBLE POUR LE TRANSPORT D'UN FLUIDE PÉTROLIER ET/OU GAZIER DESTINÉE À ÊTRE IMMERGÉE AU SEIN D'UNE ÉTENDUE D'EAU**
FLEXIBLES ROHR ZUM TRANSPORTIEREN EINES GASES UND/ODER EINES ERDÖLFLUIDS ZUM EINTAUCHEN IN EIN GEWÄSSER
FLEXIBLE PIPE FOR TRANSPORTING A GAS AND/OR PETROLEUM FLUID AND INTENDED TO BE SUBMERGED WITHIN A BODY OF WATER

(30) Priorité: 18.07.2018 FR 1800769
(43) Date de publication de la demande: 26.05.2021
(73) Titulaire: TechnipFMC Subsea France, 92400 Courbevoie (FR)
(72) Inventeur: DEMANZE, Frédéric, 76490 CAUDEBEC EN CAUX (FR); PAUMIER, Laurent, 76640 ALVIMARE (FR); SENNEVILLE, Benjamin, 76230 BOIS GUILLAUME (FR); PETITON, Guillaume, 76150 MAROMME (FR)
(74) Mandataire: Lavoix
(86) Numéro de dépôt international: PCT/EP2019/069293
(87) Numéro de publication internationale: WO 2020/016325

(56) Documents cités:
- EP-A1- 0 429 357
- WO-A1-2015/121424
- WO-A1-96/30687
- FR-A1- 2 779 797

## Description

### Domaine technique de l'invention

La présente invention concerne le domaine technique des conduites flexibles destinées au transport d'un fluide pétrolier et/ou gazier au sein d'une étendue d'eau.

Le domaine technique de l'invention est plus particulièrement relatif à une conduite flexible de type non lié (« unbonded » en langue anglaise).

### Etat de la technique

De manière générale, les conduites flexibles pour le transport d'un fluide pétrolier et/ou gazier en milieu sous-marin sont immergées au sein d'une étendue d'eau à des profondeurs pouvant dépasser 3000 m. Elles trouvent notamment leur intérêt dans l'acheminement de fluide pétrolier et/ou gazier entre une installation de fond et une installation de surface. Elles peuvent également être utilisées pour raccorder deux installations de fond. Certaines conduites flexibles peuvent par ailleurs être utilisées pour raccorder deux installations de surface.

La structure d'une conduite flexible est largement connue de l'art antérieur et est notamment décrite au sein des documents normatifs API RP 17B (Recommended Practice for Flexible Pipe), et API 17J (Specification for Unbonded Flexible Pipe), publiés par l'American Petroleum Institute.

La conduite flexible est généralement formée d'un ensemble de couches concentriques et superposées. Elle est considérée comme « non liée » dès lors qu'au moins une des couches de la conduite flexible est apte à se déplacer longitudinalement par rapport aux couches adjacentes lors d'une flexion de la conduite flexible. En particulier, une conduite flexible non liée est une conduite flexible dépourvue de matériaux liants raccordant des couches formant la conduite.

Une conduite flexible comprend généralement, de l'intérieur vers l'extérieur, une structure de renfort interne appelée communément carcasse ou carcasse interne, une gaine interne polymérique d'étanchéité, au moins une structure de renfort externe et une gaine externe polymérique d'étanchéité.

La carcasse interne a pour fonction principale la reprise des efforts radiaux d'écrasement, par exemple ceux liés à la pression hydrostatique. Elle est réalisée à partir d'un feuillard métallique profilé et enroulé à pas court pour former des spires agrafées entre elles. Le terme « à pas court » caractérise les enroulements hélicoïdaux présentant un angle d'hélice de valeur absolue comprise entre 70° et 90°. La carcasse interne présente un angle d'hélice de valeur absolue généralement proche de 85°. De manière générale, la section du feuillard est en forme de S. Aussi, chacune des spires du feuillard coopère avec une spire adjacente formant un agrafage de la structure de renfort interne.

La gaine interne polymérique d'étanchéité appelée plus communément « gaine de pression » (« pressure sheath » en langue anglaise) ou « gaine interne » est une gaine extrudée autour de la structure de renfort interne. Sa fonction principale est de confiner le fluide pétrolier et/ou gazier à l'intérieur de la conduite. Ainsi la gaine interne polymérique d'étanchéité définit un passage interne de circulation du fluide pétrolier et/ou gazier. La gaine interne est agencée au sein de la structure de renfort externe.

La structure de renfort externe est destinée à renforcer la conduite flexible contre les efforts radiaux et/ou axiaux. La conduite flexible comprend généralement deux structures de renfort Par exemple, de l'intérieur vers l'extérieur, la conduite flexible comprend une voûte de pression et des nappes d'armures de traction. La voûte de pression (« pressure armor » en langue anglaise), est généralement formée d'un fil de forme métallique enroulé à pas court en spires jointives autour de la gaine interne polymérique d'étanchéité. La voûte de pression permet ainsi de reprendre les efforts radiaux liés à la pression du fluide circulant dans la conduite. La voûte de pression présente un angle d'hélice de valeur absolue généralement proche de 85°. Les nappes d'armure de traction ont pour fonction la reprise des efforts de traction qui s'exercent sur la conduite. Ces nappes sont formées d'éléments d'armure enroulés à pas long autour de la voûte de pression. Le terme « à pas long » caractérise un enroulement hélicoïdal présentant un angle d'hélice de valeur absolue inférieure ou égale à 60°. La conduite flexible comporte généralement une ou deux paires de nappes croisées d'armures de traction, lesdites nappes ayant un angle d'hélice de valeur absolue typiquement comprise entre 20° et 60°, et avantageusement entre 25° et 55°. Les éléments d'armure, communément appelés fils d'armure, sont généralement constitués d'un matériau métallique ou composite. La gaine externe polymérique d'étanchéité appelée communément gaine externe est une gaine extrudée autour de la structure de renfort externe. Cette gaine externe a notamment pour fonction de protéger la structure de renfort externe contre la corrosion, notamment lorsque la conduite flexible est immergée.

Bien que la gaine de pression soit étanche aux hydrocarbures et aux autres fluides transportés tels que l'eau, de petites quantités de gaz peuvent lentement diffuser à travers cette dernière, notamment lorsque la température et la pression sont élevées. Ce phénomène concerne principalement des molécules de petite taille, notamment l'eau à l'état gazeux, et les gaz de dioxyde de carbone (CO2), de sulfure d'hydrogène (H2S) et de méthane (CH4). Ainsi, lorsque le fluide pétrolier et/ou gazier comprend un ou plusieurs de ces gaz, ce ou ces derniers peuvent traverser la carcasse interne qui n'est pas étanche et ensuite diffuser à travers la gaine de pression avant de s'accumuler dans l'espace annulaire situé entre la gaine de pression et la gaine externe. En présence d'eau au sein de l'espace annulaire, provenant par exemple d'une déchirure accidentelle de la gaine externe ou d'une condensation de l'eau à l'état gazeux ayant diffusé au travers de la gaine de pression, ces gaz peuvent provoquer la corrosion des éléments métalliques et le vieillissement chimique des éventuels éléments en matériau composite de la structure de renfort externe. La corrosion des éléments métalliques de la structure de renfort externe peut alors conduire à une rupture prématurée de la conduite flexible.

EP 0 429 357 décrit une conduite tubulaire flexible comportant au moins une couche tubulaire constituée par au moins une bande profilée de section sensiblement en forme de S allongé.

WO 2015/121424 décrit une conduite flexible comportant, dans sa carcasse, un insert en forme de S étendu.

WO 96/30687 décrit une conduite flexible comportant une carcasse interne munie d'un ruban évitant le fluage de la gaine de pression au sein de la carcasse.

FR 2 779 797 décrit une conduite flexible pour le transport de fluides tels que des hydrocarbures, comprenant, une carcasse métallique flexible à enroulement hélicoïdal de spires non jointives et un jonc compressible disposé dans le déjoint entre les spires consécutives.

Il existe alors un besoin de fournir une conduite flexible pour le transport d'un fluide pétrolier et/ou gazier destinée à être immergée au sein d'une étendue d'eau présentant des risques de rupture limités.

### Divulgation de l'invention

Dans ce but, l'invention propose une conduite flexible selon la revendication 1.

La structure de renfort interne présente des interstices hélicoïdaux au travers desquels des petites molécules de gaz contenus dans le fluide pétrolier et/ou gazier tels que le dioxyde de carbone (CO2), le sulfure d'hydrogène (H2S) ou le méthane (CH4) ou encore des molécules d'eau à l'état gazeux peuvent passer puis diffuser au travers de la gaine interne polymérique d'étanchéité. Selon la présente invention, l'élément d'étanchéité obture au moins une partie de ces interstices hélicoïdaux pour bloquer la circulation du fluide pétrolier e/ou gazier au travers de la structure de renfort interne. De cette façon, la structure de renfort interne ne laisse plus passer le fluide pétrolier et/ou gazier, formant alors une structure étanche qui limite considérablement la quantité de gaz pouvant diffuser dans l'espace annulaire depuis l'intérieur de la conduite flexible. Par conséquent, grâce à l'invention, la quantité de gaz corrosifs présents dans l'espace annulaire reste très faible et en deçà d'un seuil susceptible d'entrainer la dégradation de la structure de renfort externe.

Selon l'invention le feuillard profilé présente une section transversale comprenant :
- une première région d'extrémité comprenant une extrémité libre d'appui inférieure, une branche d'appui supérieure liée à l'extrémité libre d'appui inférieure par une première branche de liaison transversale,
- une deuxième région d'extrémité comprenant une branche d'appui inférieure, une extrémité libre d'appui supérieure liée à la branche d'appui inférieure par une deuxième branche de liaison transversale,
- une région centrale comprenant une troisième branche transversale liant la branche d'appui supérieure de la première région d'extrémité à la branche d'appui inférieure de la deuxième région d'extrémité,
et l'extrémité libre d'appui supérieure de la deuxième région d'extrémité d'une première spire est insérée entre l'extrémité libre d'appui inférieure et la branche d'appui supérieure de la première région d'extrémité d'une spire adjacente pour former l'agrafage de la structure de renfort interne.

La configuration de la structure de renfort interne permet de reprendre des efforts radiaux externes, typiquement ceux liés à la pression hydrostatique s'exerçant sur la conduite flexible pouvant aller jusqu'à 300 bars voire plus. Aussi, le présent agrafage forme un déjoint entre chaque spire dont l'amplitude axial peut varier autorisant des flexions de la conduite flexible. L'amplitude du déjoint est notamment limitée par la deuxième branche de liaison transversale de chaque spire. Ainsi, la structure de renfort interne est suffisamment flexible et résistante pour les applications de la conduite flexible.

Selon l'invention, l'interstice hélicoïdal est délimité radialement par la branche d'appui inférieure de la deuxième région d'extrémité de la première spire et par l'extrémité libre d'appui inférieure de la première région d'extrémité de la spire adjacente,
et /ou par l'extrémité libre d'appui supérieure de la deuxième région d'extrémité de la première spire et par l'extrémité libre d'appui inférieure de la première région d'extrémité de la spire adjacente,
et/ou par l'extrémité libre d'appui supérieure de la deuxième région d'extrémité de la première spire et par la branche d'appui supérieure de la première région d'extrémité de la spire adjacente.

Cela permet avantageusement de renforcer l'étanchéité de la structure de renfort interne. En effet, entre chaque spire, il existe un déjoint axial débouchant vers l'intérieur de la conduite flexible et un déjoint axial débouchant vers la gaine interne polymérique d'étanchéité. L'amplitude du déjoint axial interne et externe varie lors d'une flexion de la conduite flexible ce qui garantit la flexibilité de la conduite flexible. En revanche, la variation de l'amplitude du déjoint axial rendrait difficile l'insertion d'un élément d'étanchéité car ce dernier ne pourrait accommoder les variations de l'amplitude du déjoint axial en assurant une fonction d'étanchéité suffisante. Ainsi, de manière avantageuse, l'interstice hélicoïdal dans lequel est enroulé en hélice l'élément d'étanchéité présente une amplitude, prise radialement par rapport à l'axe de la conduite, sensiblement constante. Dès lors, malgré un déplacement axial des spires pour accommoder les flexions de la conduite flexible, l'étanchéité de la structure de renfort interne est préservée.

Selon un mode de réalisation de l'invention, l'extrémité libre d'appui inférieure de la première région d'extrémité d'une spire comprend un premier tronçon s'étendant de la première branche de liaison transversale à un second tronçon présentant une concavité dirigée vers la branche d'appui inférieure de la deuxième région d'extrémité de la spire adjacente.

Grâce à cette concavité, l'épaisseur de la paroi de la structure tubulaire de renfort interne est supérieure ou égale à quatre fois l'épaisseur du feuillard profilé. Ceci améliore la résistance à la pression interne et externe de la structure de renfort interne.

Selon un mode de réalisation de l'invention, l'interstice hélicoïdal est délimité radialement par la branche d'appui inférieure d'une spire et par le second tronçon de l'extrémité libre d'appui inférieure d'une spire adjacente.

Ce mode de réalisation permet avantageusement de garantir la stabilité de l'élément d'étanchéité au sein de la structure de renfort interne. En effet, la concavité de l'extrémité libre d'appui inférieure permet de fixer mécaniquement l'élément d'étanchéité au sein de l'interstice hélicoïdal. En outre, dans cette configuration, la pression régnant à l'intérieur de la conduite flexible renforce l'étanchéité de la structure de renfort interne car elle va augmenter la pression de contact entre l'élément d'étanchéité et le feuillard profilé. Aussi, dans cette configuration, sous l'effet de la pression régnant à l'intérieur de la conduite flexible, l'élément d'étanchéité a tendance à se déformer de façon à augmenter le volume occupé par l'élément d'étanchéité au sein de l'interstice hélicoïdal ce qui renforce encore l'étanchéité de la structure de renfort interne.

Selon un mode de réalisation de la conduite flexible, l'extrémité libre d'appui supérieure de la deuxième région d'extrémité d'une spire comprend un premier tronçon s'étendant de la deuxième branche de liaison transversale à un second tronçon présentant une concavité dirigée vers la branche d'appui supérieure de la première région d'extrémité de la spire adjacente et en ce qu'un interstice hélicoïdal est en outre délimité par ledit second tronçon de l'extrémité libre d'appui supérieure et par la branche d'appui supérieure de la première région d'extrémité d'une spire adjacente.

Selon un mode de réalisation de la conduite flexible, la structure de renfort interne comprend une pluralité d'élément d'étanchéité.

La pluralité d'élément d'étanchéité permet de combler une pluralité d'interstices au sein de la structure de renfort interne. Ceci permet ainsi de renforcer l'étanchéité de la structure de renfort interne vis-à-vis du fluide pétrolier et/ou gazier transporté, et ainsi de limiter la quantité de petites molécules de gaz telles que le dioxyde de carbone (CO2), le sulfure d'hydrogène (H2S), le méthane (CH4) ou encore l'eau à l'état gazeux, qui diffusent au travers de la gaine interne polymérique d'étanchéité.

Selon un mode de réalisation de la conduite flexible, l'élément d'étanchéité présente une section transversale ovale.

Alternativement, selon l'invention, l'élément d'étanchéité présente une section transversale rectangulaire.

Les différentes géométries en section transversale de l'élément d'étanchéité permettent de garantir une étanchéité de la structure de renfort interne optimale. En effet, ces géométries sont adaptées à la géométrie de l'interstice.

Selon un mode de réalisation de la conduite flexible, l'élément d'étanchéité présente une épaisseur inférieure ou égale à la moitié de l'épaisseur du feuillard profilé.

Pour un élément d'étanchéité présentant une section transversale rectangulaire, son épaisseur est avantageusement inférieure ou égale à la moitié de l'épaisseur du feuillard profilé. Plus l'épaisseur de l'élément d'étanchéité hélicoïdal est faible, plus le débit d'entrée des gaz tels que le dioxyde de carbone (CO2), le sulfure d'hydrogène (H2S), le méthane (CH4) ou encore l'eau à l'état gazeux au sein de l'espace annulaire est faible. Une telle épaisseur permet en outre de minimiser l'amplitude radiale des interstices hélicoïdaux au sein de la structure de renfort interne et ainsi de renforcer son étanchéité.

Selon un mode de réalisation de la conduite flexible, l'élément d'étanchéité comprend un corps principal formé d'un matériau polymérique ou métallique.

Le débit volume linéique des petites molécules de gaz telles que le dioxyde de carbone (CO2), le sulfure d'hydrogène (H2S), le méthane (CH4) ou encore l'eau à l'état gazeux est de l'ordre de 10⁻⁷ cm²/s à une température de 80°C, et à une pression de 40 bar au sein de la gaine interne polymérique d'étanchéité. Le débit volume linéique au sein de l'élément d'étanchéité formé d'un matériau métallique notamment, est inférieur à 10⁻⁷ cm²/s à une température de 80°C, et à une pression de 40 bar. Ceci permet ainsi de réduire considérablement la quantité de ces molécules de gaz au sein de l'espace annulaire.

Par ailleurs, le matériau polymérique présente une importante flexibilité ce qui permet de ne pas augmenter significativement la raideur de la structure de renfort interne. La conduite flexible peut alors être sollicitée en flexion sans détériorer l'étanchéité de la structure de renfort interne.

Par exemple, selon l'invention, le matériau polymérique est choisi parmi un thermoplastique ou un élastomère ou un élastomère thermoplastique.

Selon un mode de réalisation de la conduite flexible, le matériau comprend des charges destinées à diminuer le coefficient de frottement entre l'élément d'étanchéité et le feuillard profilé.

Selon un mode de réalisation de la conduite flexible, l'élément d'étanchéité comprend un revêtement polymérique destiné à renforcer l'étanchéité dudit élément d'étanchéité vis-à-vis du fluide pétrolier et/ou gazier.

Selon un mode de réalisation de la conduite flexible, l'élément d'étanchéité comprend au moins un élément de renfort destiné à renforcer la résistance de l'élément d'étanchéité vis-à-vis de la pression.

Selon un mode de réalisation de la conduite flexible, l'élément d'étanchéité est fixé à au moins une partie du feuillard profilé, par collage par exemple.

La fixation chimique de l'élément d'étanchéité à au moins une partie du feuillard profilé de la structure de renfort interne permet de maintenir l'élément d'étanchéité au sein de l'interstice hélicoïdal malgré le déplacement axial des spires lors d'une flexion de la conduite flexible.

### Description des figures

L'invention sera mieux comprise, à la lecture de la description qui va suivre, donnée uniquement à titre d'exemple, et faite en se référant aux dessins annexés, sur lesquels :
- la figure 1 est une vue en perspective d'un tronçon d'une conduite flexible selon l'invention ;
- la figure 2 est une demi vue en coupe, prise suivant un plan contenant l'axe de la conduite flexible, d'une spire du feuillard profilé de la structure de renfort interne de la conduite flexible de la figure 1 ;
- la figure 3 est une demi vue en coupe, prise suivant un plan contenant l'axe de la conduite flexible, de la structure de renfort interne et de la gaine interne de la conduite flexible de la figure 1 ;
- la figure 4A est une demi vue en coupe, prise suivant un plan contenant l'axe de la conduite flexible, d'une spire, agrafée à une spire adjacente, de la structure de renfort interne dans une première position présentant un premier déjoint axial interne Ji1 entre les spires ;
- la figure 4B est une vue analogue à la figure la figure 4A dans une deuxième position présentant un deuxième déjoint axial interne Ji2 entre les spires ;
- la figure 5A est une demi vue en coupe, prise suivant un plan contenant l'axe de la conduite flexible, d'une spire de la structure de renfort interne agrafée à une spire adjacente, comprenant un élément d'étanchéité enroulé en hélice au sein d'un interstice hélicoïdal ;
- les figures 5B à 5D sont des vues analogues à la figure 5A, illustrant des variantes de réalisation ;
- la figure 6 est une demi vue en coupe, prise suivant un plan contenant l'axe de la conduite flexible, de la structure de renfort interne selon l'invention.

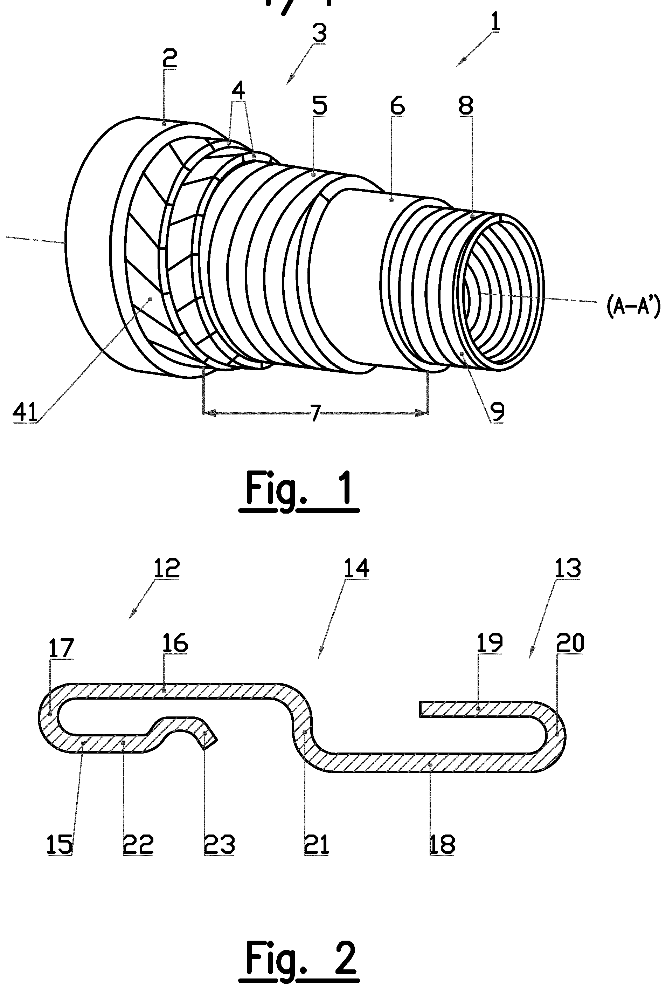

Les figures 2 à 5D sont des vues de conduites flexibles qui ne sont pas selon l'invention.

### Modes préférés de réalisation de l'invention

Une conduite flexible (1) selon l'invention est par exemple représentée en perspective sur la figure 1.

La conduite flexible (1) est destinée à être immergée au sein d'une étendue d'eau, pour le transport d'un fluide pétrolier et/ou gazier.

En particulier, la conduite flexible (1) assure le transport du fluide pétrolier et/ou gazier entre un ensemble de fond et un ensemble de surface, entre deux ensembles de fond ou encore deux ensembles de surface. L'ensemble de fond est par exemple un collecteur (dit « manifold » en langue anglaise), une tête de puits (dit « wellhead » en langue anglaise) ou tout autre structure sous-marine à laquelle la conduite flexible peut être raccordée. L'ensemble de surface est par exemple une plateforme fixe telle qu'une plateforme autoélévatrice (dite « jack-up rig » en langue anglaise) ou une plateforme mobile telle qu'une unité flottante de production, de stockage et de déchargement dite FPSO (pour « Floating Production Storage and Offloading » en langue anglaise) ou tout autre ensemble de surface auquel la conduite peut être raccordée.

L'étendue d'eau dans laquelle est immergée la conduite flexible (1) est par exemple un lac, une mer ou un océan. La profondeur de l'étendue d'eau est comprise entre 50 m et 5000 m, généralement comprise entre 100 m et 2500 m. La pression hydrostatique s'exerçant sur la conduite flexible (1) peut ainsi aller jusqu'à 500 bar.

Le fluide pétrolier et/ou gazier est formé d'un mélange multiphasique comprenant des phases liquides formées de composés carbonés linéaires et/ou cycliques, saturés et/ou insaturés, de densité variable et d'eau, d'une phase gazeuse formée de méthane (CH₄), de dioxyde de carbone (CO₂), de sulfure d'hydrogène (H₂S) et autres molécules de gaz, et éventuellement d'une phase solide comprenant du sable. La température du fluide pétrolier et/ou gazier en sortie de puits est généralement comprise entre 50°C et 200°C, typiquement comprise entre 50°C et 130°C. La pression du fluide pétrolier et/ou gazier est supérieure à 100 bar, supérieure à 300 bar, supérieure à 500 bar ou supérieure à 1000 bar. L'invention est particulièrement adaptée au cas où le fluide pétrolier et/ou gazier présente une pression partielle de dioxyde de carbone (CO₂) comprise entre 50 bar et 100 bar, voire supérieure à 100 bar et/ou une pression partielle en sulfure d'hydrogène (H2S) supérieure à 10 mbar, supérieure à 100 mbar voire supérieure à 1 bar.

La conduite flexible (1) comprend une pluralité de couches concentriques polymériques, métalliques et éventuellement composites, agencées autour d'un axe (A-A').

Dans la description qui va suivre, le terme « extérieur » s'entend comme relativement plus éloigné radialement de l'axe (A-A') de la conduite flexible (1). Le terme « intérieur » s'entend comme relativement plus proche radialement de l'axe (A-A') de la conduite flexible (1).

La conduite flexible (1) comprend de l'extérieur vers l'intérieur, une gaine externe (2) d'étanchéité, une structure de renfort externe (3), une gaine interne (6) et une structure de renfort interne (8).

La gaine externe (2) d'étanchéité est destinée à limiter la pénétration de l'eau de l'étendue d'eau au sein de la conduite flexible (1). La gaine externe (2) permet également de limiter l'usure de la conduite flexible (1) lors de l'installation par exemple.

La gaine externe (2) est en contact avec l'eau de l'étendue d'eau. La gaine externe (2) présente une épaisseur comprise entre 5 mm et 15 mm. Elle est par exemple réalisée en matériau polymérique choisi par exemple parmi une polyoléfine telle qu'un polyéthylène ou un polyamide tel qu'un polyamide 11 ou un polyamide 12. Selon un autre exemple, le matériau de la gaine externe (2) est un poly(p-phénylènetéréphtalamide).

La gaine externe (2) est réalisée par extrusion d'une structure tubulaire étanche. Selon un autre exemple, la gaine externe (2) est réalisée par extrusion de bandes, qui sont ensuite enroulées pour former une structure tubulaire étanche.

La structure de renfort externe (3) est destinée à renforcer la conduite flexible (1) contre des efforts radiaux internes et/ou des efforts de traction.

La structure de renfort externe (3) est agencée à l'intérieur de la gaine externe (2).

Sur l'exemple de la figure 1, la conduite flexible (1) comprend deux structures de renfort externe (3) formées d'une paire de nappes d'armures de traction (4) et d'une voûte de pression (5).

La paire de nappes d'armures de traction (4) est destinée à renforcer la conduite flexible (1) contre les efforts de traction liés notamment au poids de la conduite flexible (1).

La paire de nappes d'armures de traction (4) est formée d'un enroulement en hélice d'une pluralité d'éléments d'armures (41). Les éléments d'armures (41) sont enroulés selon un pas long caractérisant un angle d'hélice d'une valeur absolue comprise entre 20° et 60° et avantageusement entre 25° et 55°. Pour assurer l'équilibre de la paire de nappes d'armures de traction (4) sous l'effet de la pression interne et externe, les éléments d'armures (41) d'une première nappe d'armures de traction (4) sont enroulés avec un angle d'hélice opposé à l'angle d'hélice des éléments d'armures (41) d'une deuxième nappe d'armures de traction (4).

Les éléments d'armures (41) sont par exemple formés d'un matériau métallique choisi parmi les aciers inoxydables ou les aciers au carbone comprenant entre 0.1% et 0.8% de carbone ou les aciers faiblement alliés ou un mélange de ces matériaux. Les aciers faiblement alliés caractérisent les alliages dans lesquels la teneur de chaque élément d'alliage est inférieure à 5% et dans lesquels la teneur en manganèse est inférieure à 1%. Selon une alternative, les éléments d'armures (41) sont formés d'un matériau composite comprenant des fibres telles que des fibres de carbone noyés au sein d'une matrice polymérique comme une résine époxydique. La matrice polymérique est selon un autre mode de réalisation choisi parmi par exemple une polyoléfine comme un polyéthylène ou un polypropylène ou encore un polyaryléthercétone comme un polyétheréthercétone. Le matériau composite permet de réduire le poids de la paire de nappes d'armures de traction (4) et ainsi le poids total de la conduite flexible (1).

La conduite flexible (1) peut comprendre une ou deux paires de nappes d'armures de traction (4).

La voûte de pression (5) est destinée à renforcer la conduite flexible (1) contre les efforts radiaux internes liés notamment à la pression régnant à l'intérieur de la conduite flexible (1). La voûte de pression (5) est agencée à l'intérieur de la paire de nappes d'armures de traction (4).

La voûte de pression (5) comprend un enroulement en hélice à pas court de profils métalliques. Il est entendu par « pas court » un angle d'hélice d'une valeur absolue comprise entre 70° et 90°, avantageusement de 85°.

La section transversale des profils métalliques de la voûte de pression (5) est généralement en forme de U, de T, de K, de Z ou de I.

En fonction des conditions de pression et de température, la conduite flexible (1) peut être dépourvue de voûte de pression (5).

En outre, la conduite flexible (1) comprend une gaine interne (6) de protection.

La gaine interne (6) est agencée à l'intérieur de la structure de renfort (3). La gaine interne (6) est en particulier agencée à l'intérieur de la voûte de pression (5). La gaine interne (6) confère une protection à la conduite flexible (1) en cas d'une perte d'étanchéité de la structure de renfort interne (8). La gaine interne (6) constitue également un support présentant une surface lisse sur laquelle la structure de renfort externe (3) est formée. En effet, la structure de renfort interne (8) présente généralement une surface irrégulière qui peut fragiliser la résistance aux efforts radiaux et/ou axiaux de la structure de renfort externe (3).

La gaine interne (6) est formée d'un matériau polymérique. Le matériau polymérique de la gaine interne (6) est choisi parmi une polyoléfine tel qu'un polyéthylène ou un polypropylène, un polyamide tel qu'un polyamide 11 ou un polyamide 12, un polymère fluoré tel qu'un polyfluorure de vinylidène ou un polyaryléthercétone tel qu'un polyétheréthercétone.

Selon un autre mode de réalisation, la gaine interne (6) est formée d'un matériau composite comprenant des éléments de renforts noyés dans une matrice polymérique. Les éléments de renfort sont par exemple des fibres de carbone et la matrice polymérique est formée d'un matériau choisi par exemple parmi une résine époxy, un polyamide, une polyoléfine telle qu'un polyéthylène ou un polypropylène, un polyaryléthercétone tel qu'un polyétheréthercétone.

La gaine interne (6) présente par exemple une épaisseur comprise entre 1 mm et 20 mm. Elle est généralement réalisée par extrusion.

La gaine externe (2) et la gaine interne (6) délimitent un espace annulaire (7) dans lequel la structure de renfort externe (3) est agencée.

La conduite flexible (1) peut comprendre des couches polymériques et/ou métalliques supplémentaires. Par exemple, la conduite flexible (1) peut comprendre une gaine d'isolation thermique agencée par exemple autour de la structure de renfort externe (3). L'espace annulaire (7) peut ainsi comprendre plusieurs sous espace annulaires délimités par la gaine interne (6) et par une couche métallique ou polymérique supplémentaire et/ou par la gaine externe (2) et par une couche métallique ou polymérique supplémentaire.

Avantageusement, selon l'invention, la structure de renfort externe (3) est libre de se déplacer longitudinalement par rapport à la gaine externe (2) et par rapport à la gaine interne (6) lors d'une flexion de la conduite flexible (1). En d'autres termes, la structure de renfort externe (3) est dépourvue de matériau de liaison. La conduite flexible (1) est du type non lié.

S'agissant de la géométrie, des matériaux, de l'agencement ainsi que de la fabrication de la gaine externe (2), de la paire de nappes d'armures de traction (4), de la voûte de pression (5) et éventuellement de la gaine interne (6), on pourra par exemple se reporter aux documents normatifs API 17 J, 4^{ième} édition, Mai 2014 et API 17 B, 5^{ième} édition, Mai 2014, publiés par l'American Petroleum Institute.

En outre, la structure de renfort interne (8) tubulaire est destinée à renforcer la conduite flexible (1) contre des efforts radiaux externes.

La structure de renfort interne (8) permet de limiter les risques d'effondrement de la conduite flexible (1) sous l'effet de la pression hydrostatique notamment, pouvant aller jusqu'à 500 bars. La structure de renfort interne (8) est en contact avec le fluide pétrolier et/ou gazier.

La structure de renfort interne (8) comprend un feuillard profilé (9), enroulé en hélice pour former une structure tubulaire.

Selon la présente invention, il est entendu par « feuillard profilé », un feuillard dont la section transversale initiale a été modifiée par pliage pour obtenir une section transversale finale de géométrie différente. La section transversale du feuillard profilé (9) s'entend comme la section prise selon un plan perpendiculaire à l'axe (A-A') de la conduite flexible (1).

Le feuillard profilé (9) présente une épaisseur comprise entre 0.5 mm et 3.5 mm.

L'épaisseur de la paroi de la structure de renfort interne (8) est par exemple supérieure ou égale à quatre fois l'épaisseur du feuillard profilé (9). Avantageusement, l'épaisseur de la paroi de la structure de renfort interne (8) est comprise entre quatre fois et six fois l'épaisseur du feuillard profilé (9). Ceci permet d'augmenter la résistance à la pression interne et externe de la structure de renfort interne (8).

Le feuillard profilé (9) est enroulé en hélice selon un pas court. Il est entendu par « pas court » un angle d'hélice d'une valeur absolue comprise entre 70° et 90°, avantageusement de 85°.

Le feuillard profilé (9) est formé d'un matériau métallique résistant aux caractéristiques physico-chimiques du fluide pétrolier et/ou gazier transporté.

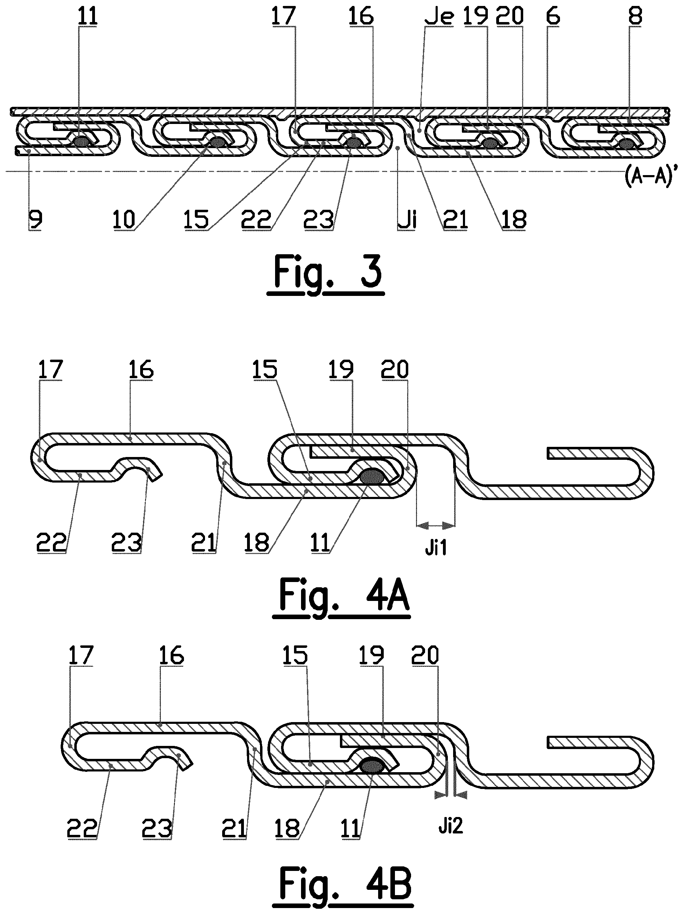

Comme représenté sur la figure 3, selon l'invention, les spires adjacentes du feuillard profilé (9) sont agrafées. On entend par agrafées, que les spires adjacentes du feuillard profilé (9) coopèrent ensemble de façon à ce que le déplacement axial d'une spire est limité par une spire adjacente.

L'agrafage est destiné à renforcer la résistance de la structure de renfort interne (8) sous l'effet de la pression hydrostatique s'exerçant sur la conduite flexible (1) et sous l'effet de la pression interne.

Comme représenté sur la figure 3, l'agrafage des spires adjacentes du feuillard profilé (9) délimitent un déjoint axial interne (Ji) débouchant vers l'intérieur de la conduite flexible (1) et un déjoint axial externe (Je) débouchant vers l'extérieur de la conduite flexible (1). La gaine interne (6) étant agencée sur la structure de renfort interne (8) a tendance à fluer partiellement dans les déjoints axiaux externes (Je). Par ailleurs, les déjoints axiaux internes (Ji) définissent une surface interne rugueuse. La conduite flexible (1) est alors dite à passage non lisse dans le domaine technique de l'invention (« rough bore » en langue anglaise).

Le déjoint axial interne (Ji) et le déjoint axial externe (Je) assurent la flexibilité de la structure de renfort interne (8). En effet, la conduite flexible (1) est sollicitée en flexion lors du stockage, de l'installation et du fonctionnement de la conduite flexible (1). L'amplitude du déjoint axial interne (Ji) et du déjoint axial externe (Je) permet d'accommoder le rayon de courbure de la conduite flexible (1). Il est mesuré selon l'axe de la conduite flexible (1) entre deux zones adjacentes de spires adjacentes.

Par exemple, la figure 4A représente un premier déjoint axial interne (Ji1) à l'extrados qui résulte d'une flexion importante de la conduite flexible (1) c'est-à-dire, d'un faible rayon de courbure de la conduite flexible (1). Sur la figure 4B, la conduite flexible (1) est moins sollicitée en flexion que sur la figure 4A ce qui résulte en un deuxième déjoint axial interne (Ji2) inférieur à (Ji1). Sur la figure 4B, le rayon de courbure de la conduite flexible (1) est supérieur au rayon de courbure de la conduite flexible selon la figure 4A.

Par ailleurs, le feuillard profilé (9) présente une section transversale en forme de S.

Comme représenté sur la figure 2, le feuillard profilé (9) présente une section transversale comprenant une première région d'extrémité (12), une deuxième région d'extrémité (13) et une région centrale (14).

La première région d'extrémité (12) comprend une extrémité libre d'appui inférieure (15), une branche d'appui supérieure (16) liée à l'extrémité libre d'appui inférieure (15) par une première branche de liaison transversale (17).

Selon un exemple de réalisation particulièrement avantageux, l'extrémité libre d'appui inférieure (15) de la première région d'extrémité (12) est formée d'un premier tronçon (22) s'étendant de la première branche de liaison transversale (17) vers un second tronçon (23). Le second tronçon (23) présente une concavité. La concavité permet d'augmenter l'épaisseur de la paroi de la structure de renfort interne (8) et ainsi de renforcer sa résistance à la pression interne et externe. Comme représenté sur la figure 3, la concavité est dirigée vers la branche d'appui inférieure (18) de la deuxième région d'extrémité (13) d'une spire adjacente. Avantageusement, l'extrémité libre du second tronçon (23) d'une spire repose et s'étend sur au moins une partie de la branche d'appui inférieure (18) d'une spire adjacente (non représenté). Ceci permet de garantir une stabilité de la structure du feuillard profilé (9) sous l'effet de la pression interne ou externe par exemple.

Selon un autre exemple de réalisation non représenté, le second tronçon (23) présente une concavité dirigée vers la branche d'appui supérieure (16) de la première région d'extrémité (12) d'une spire adjacente.

En outre, le second tronçon (23) concave présente avantageusement un sommet droit présentant une largeur supérieure ou égale à la moitié de la largeur du second tronçon (23).

Avantageusement, le premier tronçon (22) et la branche d'appui supérieure (16) sont droites. Avantageusement, la branche d'appui supérieure (16) et le premier tronçon (22) sont parallèles à l'axe de la conduite flexible (1). La première branche de liaison transversale (17) est avantageusement courbe.

La première région d'extrémité (12) forme ainsi un premier caisson ouvert lorsque les spires ne sont pas agrafées.

La deuxième région d'extrémité (13) comprend une branche d'appui inférieure (18), une extrémité libre d'appui supérieure (19) liée à la branche d'appui inférieure (18) par une deuxième branche de liaison transversale (20).

Avantageusement, la branche d'appui inférieure (18) et l'extrémité libre d'appui supérieure (19) sont droites. La deuxième branche de liaison transversale (20) est avantageusement courbe.

La deuxième région d'extrémité (13) forme ainsi un deuxième caisson ouvert lorsque les spires ne sont pas agrafées.

La région centrale (14) comprend une troisième branche de liaison transversale (21) liant la branche d'appui supérieure (16) de la première région d'extrémité (12) à la branche d'appui inférieure (18) de la deuxième région d'extrémité (13).

Avantageusement, la troisième branche de liaison transversale (21) est courbe.

Comme représenté sur la figure 3, l'extrémité libre d'appui supérieure (19) de la deuxième région d'extrémité (13) d'une spire est insérée entre l'extrémité libre d'appui inférieure (15) et la branche d'appui supérieure (16) de la première région d'extrémité (12) d'une spire adjacente pour former l'agrafage de la structure de renfort interne (8).

Ainsi, l'extrémité libre d'appui supérieure (19) d'une spire est insérée au sein du premier caisson de la première région d'extrémité (12) d'une spire adjacente. L'extrémité libre d'appui supérieure (19) et la branche d'appui supérieure (16) sont ainsi superposées. La paroi latérale du caisson opposée à la première branche de liaison transversale (17) est donc refermée par la deuxième branche de liaison transversale (20) d'une spire adjacente après agrafage.

Par ailleurs, comme représenté sur la figure 3, le feuillard profilé (9) délimite au moins un interstice hélicoïdal (10).

L'interstice hélicoïdal (10) selon l'invention est défini comme le jeu délimité radialement par deux zones adjacentes de deux spires adjacentes. Le terme radialement s'entendant par rapport à la conduite flexible (1) et signifiant le long d'un rayon de la conduite flexible (1). L'amplitude de l'interstice hélicoïdal (10) est mesurée radialement entre deux zones adjacentes de deux spires adjacentes. Avantageusement, l'amplitude de l'interstice hélicoïdal (10) est sensiblement constante et indépendante du rayon de courbure de la conduite flexible (1).

L'interstice hélicoïdal (10) est délimité radialement par la branche d'appui inférieure (18) de la deuxième région d'extrémité (13) d'une spire et par l'extrémité libre d'appui inférieure (15) de la première région d'extrémité (12) d'une spire adjacente.

Selon un autre mode de réalisation, l'interstice hélicoïdal (10) est délimité radialement par la branche d'appui inférieure (18) de la deuxième région d'extrémité (13) d'une spire et par le second tronçon (23) de l'extrémité libre d'appui inférieure (15) d'une spire adjacente.

Selon un autre mode de réalisation, l'interstice hélicoïdal (10) est délimité radialement par la branche d'appui inférieure (18) de la deuxième région d'extrémité (13) d'une spire et par le premier tronçon (22) de l'extrémité libre d'appui inférieure (15) d'une spire adjacente. Alternativement, l'interstice hélicoïdal (10) est délimité radialement par le second tronçon (23) de l'extrémité libre d'appui supérieure (19) et par la branche d'appui supérieure (16) de la première région d'extrémité (12) d'une spire adjacente.

Selon un autre mode de réalisation, l'interstice hélicoïdal (10) est délimité radialement par l'extrémité libre d'appui supérieure (19) de la deuxième région d'extrémité (13) d'une spire et par l'extrémité libre d'appui inférieure (15) de la première région d'extrémité (12) d'une spire adjacente.

Selon un autre mode de réalisation, l'interstice hélicoïdal (10) est délimité radialement par l'extrémité libre d'appui supérieure (19) de la deuxième région d'extrémité (13) d'une spire et par la branche d'appui supérieure (16) de la première région d'extrémité (12) d'une spire adjacente.

Le feuillard profilé (9) peut comprendre une pluralité d'interstices hélicoïdaux (10). Les exemples de réalisation de l'interstice hélicoïdal (10) peuvent être pris selon toutes les combinaisons possibles.

Par exemple, le feuillard profilé (9) peut comprendre quatre interstices hélicoïdaux (10), chacun étant respectivement délimité radialement par la branche d'appui inférieure (18) de la deuxième région d'extrémité (13) d'une spire et par le second tronçon (23) de l'extrémité libre d'appui inférieure (15) d'une spire adjacente, par la branche d'appui inférieure (18) de la deuxième région d'extrémité (13) d'une spire et par le premier tronçon (22) de l'extrémité libre d'appui inférieure (15) d'une spire adjacente, par l'extrémité libre d'appui supérieure (19) de la deuxième région d'extrémité (13) d'une spire et par l'extrémité libre d'appui inférieure (15) de la première région d'extrémité (12) d'une spire adjacente, par l'extrémité libre d'appui supérieure (19) de la deuxième région d'extrémité (13) d'une spire et par la branche d'appui supérieure (16) de la première région d'extrémité (12) d'une spire adjacente.

L'interstice hélicoïdal (10) représente un chemin de passage du fluide pétrolier et/ou gazier du passage interne de la conduite flexible (1) vers la gaine interne (6). Sous une forte pression et une température élevée, les molécules de gaz contenus dans le fluide pétrolier et/ou gazier telles que le méthane (CH4), le dioxyde de carbone (CO2), le sulfure d'hydrogène (H2S) ainsi que l'eau à l'état gazeux vont pouvoir diffuser au travers de la gaine interne (6) et s'accumuler au sein de l'espace annulaire (7). La fugacité du dioxyde de carbone (CO2) dans l'espace annulaire (7) est alors généralement supérieure ou égale à 50 bar. La fugacité du sulfure d'hydrogène (H2S) dans l'espace annulaire (7) est alors généralement comprise entre 1 bar et 2 bar.

Ces gaz, combinés à l'eau pouvant provenir d'une déchirure de la gaine externe (2) ou de la condensation de l'eau ayant diffuser au travers de la gaine interne (6), peuvent conduire à la corrosion de la structure de renfort externe (3) et/ou à son vieillissement chimique, ce qui peut entrainer la rupture de la conduite flexible (1).

Pour limiter les risques de rupture de la conduite flexible (1), selon l'invention, la structure de renfort interne (8) comprend en outre un élément d'étanchéité (11) enroulé en hélice au sein de l'interstice hélicoïdal (10) destiné à limiter le passage du fluide pétrolier et/ou gazier du passage interne vers l'espace annulaire (7).

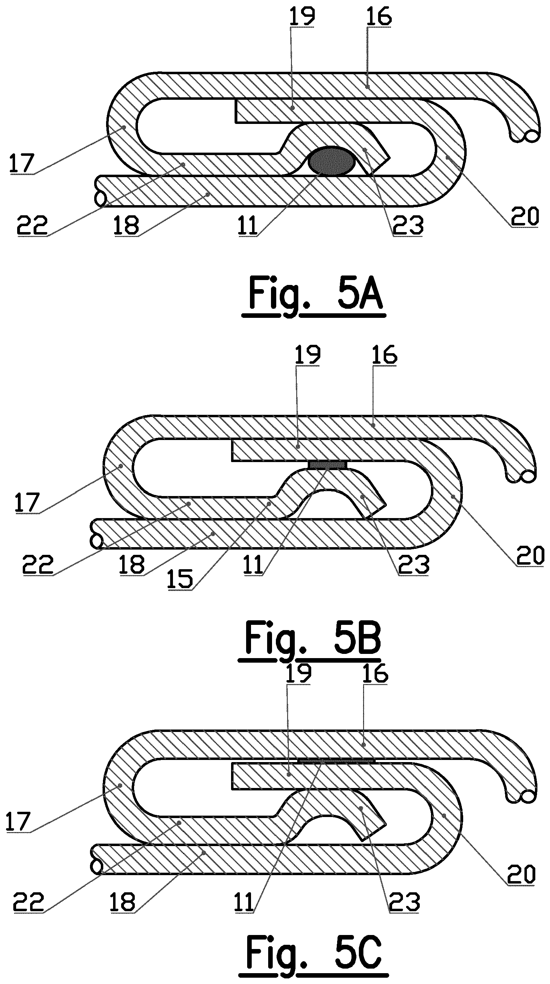

Selon un exemple représenté sur la figure 5A, l'élément d'étanchéité (11) est enroulé en hélice au sein de l'interstice hélicoïdal (10) délimité radialement par la branche d'appui inférieure (18) de la deuxième région d'extrémité (13) d'une spire et par le second tronçon (23) de l'extrémité libre d'appui inférieure (15) d'une spire adjacente.

Selon un autre exemple de réalisation représenté sur la figure 5B, l'élément d'étanchéité (11) est enroulé en hélice au sein de l'interstice hélicoïdal (10) délimité radialement par l'extrémité libre d'appui supérieure (19) de la deuxième région d'extrémité (13) d'une spire et par l'extrémité libre d'appui inférieure (15) de la première région d'extrémité (12) d'une spire adjacente.

Selon un autre exemple de réalisation représenté sur la figure 5C, l'élément d'étanchéité (11) est enroulé en hélice au sein de l'interstice hélicoïdal (10) délimité radialement par l'extrémité libre d'appui supérieure (19) de la deuxième région d'extrémité (13) d'une spire et par la branche d'appui supérieure (16) de la première région d'extrémité (12) d'une spire adjacente.

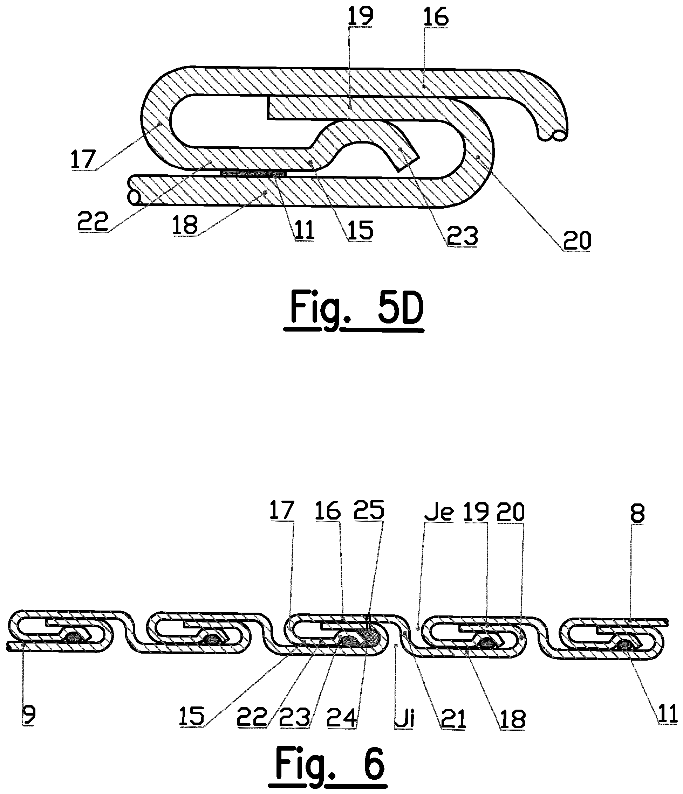

Selon un autre exemple de réalisation représenté sur la figure 5D, l'élément d'étanchéité (11) est enroulé en hélice au sein de l'interstice hélicoïdal (10) délimité radialement par la branche d'appui inférieure (18) de la deuxième région d'extrémité (13) d'une spire et par le premier tronçon (22) de l'extrémité libre d'appui inférieure (15) d'une spire adjacente.

L'invention permet de maintenir l'étanchéité de la structure de renfort (8) vis-à-vis du fluide pétrolier et/ou gazier transporté indépendamment du rayon de courbure de la conduite flexible (1). En effet, comme représenté sur les figures 4A et 4B, le déjoint axial interne (Ji) varie en fonction du rayon de courbure de la conduite flexible (1). Selon la présente invention, l'élément d'étanchéité (11) est enroulé en hélice au sein de l'interstice (11) dont l'amplitude mesuré radialement par rapport à l'axe de la conduite (1) ne varie que sensiblement. Ainsi, l'élément d'étanchéité (11) assure sa fonction de manière constante. La conduite flexible (1) est alors adaptée aux applications aussi bien statiques que dynamiques.

Pour renforcer l'étanchéité de la structure de renfort interne (8), cette dernière comprend avantageusement une pluralité d'élément d'étanchéité (11).

La structure de renfort interne (8) comprend par exemple entre deux et quatre éléments d'étanchéité (11), chacun étant respectivement enroulé en hélice dans les interstices hélicoïdaux (10) tels que décrits précédemment.

Avantageusement, la structure de renfort interne (8) comprend quatre éléments d'étanchéité (11), chacun étant respectivement enroulé en hélice dans les interstices hélicoïdaux (10) tels que décrits précédemment.

Avantageusement, l'élément d'étanchéité (11) comble au moins 50% du volume de l'interstice hélicoïdal (10).

L'élément d'étanchéité (11) présente une section transversale polygonale, par exemple de type rectangulaire, carré, hexagonale.

Avantageusement, l'élément d'étanchéité (11) présente une section transversale rectangulaire. Ce mode de réalisation est particulièrement adapté à la géométrie de l'interstice hélicoïdal (10) délimité par les branches droites de la section transversale du feuillard profilé (9) ce qui permet de renforcer l'étanchéité de la structure de renfort interne (8).

De manière préférée, la section transversale de l'élément d'étanchéité (11) présente une largeur supérieure ou égale à la moitié de la largeur prise selon l'axe (A-A') de la branche d'appui supérieure (16) ou à la moitié de la largeur du sommet du second tronçon (23) de l'extrémité libre d'appui inférieure (15). Avantageusement, la largeur de l'élément d'étanchéité (11) est supérieure à 2 mm. De manière préférée, l'épaisseur de l'élément d'étanchéité (11) est supérieure à la moitié de l'épaisseur du feuillard profilé (9). Avantageusement, l'épaisseur de l'élément d'étanchéité (11) est supérieure à 1.5 mm.

De manière alternative, l'élément d'étanchéité (11) présente une section transversale ovale. Cette section est particulièrement adaptée à la géométrie de l'interstice hélicoïdal (10) délimité radialement par la branche d'appui inférieure (18) d'une spire et par le second tronçon (23) d'une spire adjacente, le second tronçon (23) présentant une concavité dirigée vers la branche d'appui inférieure (18). L'élément d'étanchéité (11) permet ainsi de combler sensiblement tout le volume de l'interstice hélicoïdal (10) afin de renforcer l'étanchéité de la structure de renfort interne (8).

Alternativement, l'élément d'étanchéité (11) présente une section transversale circulaire ou toute autre géométrie convenant à la présente invention.

Lorsque la structure de renfort interne (8) comprend une pluralité d'élément d'étanchéité (11), chaque élément d'étanchéité (11) peut présenter une section transversale différente pour accommoder la géométrie de chaque interstice hélicoïdal (10).

L'élément d'étanchéité (11) présente un corps principal formé d'un matériau. Le matériau est par exemple polymérique ou métallique.

Le matériau métallique du corps principal est par exemple choisi parmi les aciers inoxydables, les alliages de cuivre ou tout autre matériau résistant à la nature chimique du fluide pétrolier et/ou gazier transporté dans les conditions de pression et de température de transport. Un avantage supplémentaire de l'élément d'étanchéité (11) présentant un corps principal formé d'un matériau métallique réside dans le fait que des mesures de conductivité électrique peuvent être réalisés sur l'élément d'étanchéité (11). Ceci permet notamment de détecter après la fabrication de la structure de renfort interne (8) une rupture éventuelle de l'élément d'étanchéité (11).

Selon une alternative, le matériau du corps principal de l'élément d'étanchéité (11) est formé de fibres de verre. Ceci permet également de contrôler l'intégrité de l'élément d'étanchéité (11).

Le matériau polymérique est par exemple choisi parmi un thermoplastique tel qu'un un polyaryléthcétone, notamment un polyétheréthercétone. Avantageusement, le matériau polymérique est choisi parmi un polymère fluoré comme un polyfluorure de vinylidène, une polyoléfine comme un polyéthylène ou un polypropylène, un polyamide, ou encore un polyarylenesulfide, un élastomère tel qu'un silicone, un fluorosilicone, un chloropène, un copolymère butadiène-acrylonitrile (NBR, pour « nitrile butadiene rubber » en langue anglaise), un néoprène, un copolymère d'isobutylène-isoprène, un éthylène-propylène-diène monomère (EPDM) ou un élastomère thermoplastique tel qu'un silicone thermoplastique ou un élastomère thermoplastique styrénique.

Alternativement, le corps principal est formé d'un matériau composite ou hybride.

Avantageusement, le matériau polymérique du corps principal est par exemple choisi parmi les polymères présentant un module d'élasticité mesuré à 20°C supérieur ou égal à 2500 MPa.

Le matériau du corps principal peut en outre comprendre des charges destinées à diminuer le coefficient de frottement entre l'élément d'étanchéité (11) et le feuillard profilé (9). Le matériau des charges est par exemple un polytrétrafluoroéthylène.

Avantageusement, l'élément d'étanchéité (11) comprend un revêtement polymérique destiné à renforcer l'étanchéité de l'élément d'étanchéité (11) vis-à-vis du fluide pétrolier et/ou gazier. Le revêtement polymérique est par exemple formé d'un matériau présentant un module d'élasticité mesuré à 20°C inférieur ou égal à 2000 MPa.

De manière préférée, la perméabilité du revêtement polymérique vis-à-vis du sulfure d'hydrogène et/ou du dioxyde de carbone à une pression de 40 bar et à une température de 80°C est inférieure à la perméabilité du corps principal de l'élément d'étanchéité (11) vis-à-vis du sulfure d'hydrogène et/ou du dioxyde de carbone dans les mêmes conditions.

L'élément d'étanchéité (11) peut comprendre au moins un élément de renfort destiné à renforcer la résistance de l'élément d'étanchéité (11) vis-à-vis de la pression. L'élément de renfort est par exemple inséré au sein du corps principal de l'élément d'étanchéité (11). L'élément de renfort est par exemple formé d'un matériau métallique ou formé d'un poly(p-phénylènetéréphtalamide) ou d'un autre polymère thermoplastique choisi par exemple parmi la famille des polyaryléthercétones tels qu'un polyétheréthercétone ou d'un matériau composite. Selon une alternative, l'élément de renfort est agencé autour de l'élément d'étanchéité (11).

L'élément de renfort formé d'un matériau métallique est également destiné à contrôler l'intégrité de l'élément d'étanchéité (11). En effet, par mesure d'un signal électrique par exemple au sein de l'élément d'étanchéité (11), il est possible d'identifier une rupture de l'élément d'étanchéité (11).

Selon une alternative ou en combinaison de l'élément de renfort, l'élément d'étanchéité (11) comprend une fibre optique agencée au sein du corps principal de l'élément d'étanchéité (11). La fibre optique permet par exemple de contrôler la température le long de la conduite flexible (1).

Avantageusement, l'élément de renfort métallique sous un courant électrique génère une énergie thermique par effet Joule pour pallier aux éventuels bouchons d'hydrates qui peuvent se créer lors d'une diminution de la température du fluide pétrolier et/ou gazier.

Selon un mode de réalisation, le corps principal de l'élément d'étanchéité (11) est poreux. Avantageusement, le taux de porosité du corps principal est compris entre 0.5% et 10%. Ceci permet de faciliter la fabrication de la structure de renfort interne (8) en ce que l'agrafage du feuillard profilé (9) n'est pas limité par la présence de l'élément d'étanchéité (11) qui est capable de se déformer pour autoriser un tel agrafage.

Selon un exemple de réalisation, l'élément d'étanchéité (11) est fixé à au moins une partie du feuillard profilé (9). La fixation est réalisée par exemple par collage. Ceci permet de maintenir l'élément d'étanchéité (11) au sein de l'interstice hélicoïdal (10) sous l'effet de la pression ou suite à une flexion de la conduite flexible (1).

Selon l'invention, comme représenté sur la figure 6, la structure de renfort interne (8) comprend une résine d'étanchéité (24) destinée à améliorer l'étanchéité de la structure de renfort interne (8). La résine d'étanchéité (24) est agencée au sein d'au moins une partie du volume du premier caisson d'une spire, le premier caisson étant refermé latéralement par la deuxième branche de liaison transversale (20) d'une spire adjacente. Avantageusement, la résine d'étanchéité (24) est agencée au sein d'au moins une partie du volume du premier caisson de chaque spire.

La résine d'étanchéité (24) est par exemple une résine de type époxy ou cyanoacrylate ou silicone.

La résine d'étanchéité (24) est par exemple injectée à l'état liquide par un orifice d'injection (25) réalisé à travers le feuillard profilé (9). L'orifice d'injection (25) est par exemple réalisé à travers la superposition de la branche d'appui supérieure (16) de la première région d'extrémité (12) d'une spire et l'extrémité libre d'appui supérieure (19) d'une spire adjacente, et préférentiellement à travers chaque spire.

Avantageusement, au moins un orifice de vérification (non représenté) est également réalisé à travers le feuillard profilé (9). L'orifice de vérification permet de contrôler le volume de résine d'étanchéité (24) introduit. L'orifice de vérification est un orifice réalisé au travers du feuillard profilé (9) sur une même spire comprenant l'orifice d'injection (25) ou sur une spire adjacente.

Par exemple, l'orifice d'injection (25) et éventuellement l'orifice de vérification sont réalisés à travers le feuillard profilé (9) après l'enroulement et agrafage du feuillard profilé (9). Ce mode de réalisation permet de positionner l'orifice d'injection (25) et l'orifice de vérification le long de la structure de renfort interne (8). Selon un autre mode de réalisation, l'orifice d'injection (25) et éventuellement l'orifice de vérification sont réalisés à travers le feuillard profilé (9) avant l'enroulement dudit feuillard profilé (9). Selon un autre exemple, l'orifice d'injection (25) et éventuellement l'orifice de vérification sont réalisés avant le profilage du feuillard formant le feuillard profilé (9).

La température de polymérisation de la résine d'étanchéité (24) est supérieure ou égale à 10°C et préférentiellement comprise entre 10°C et 35°C.

Avantageusement, la résine d'étanchéité (24) obture également l'orifice d'injection (25) de façon à limiter les chemins de fuite du fluide pétrolier et/ou gazier.

Un procédé de fabrication de la conduite flexible (1) pour le transport d'un fluide pétrolier et/ou gazier destinée à être immergée au sein d'une étendue d'eau va maintenant être décrit.

Le procédé de fabrication de la conduite flexible (1) comprend les étapes suivantes :
(a) enrouler en hélice un feuillard profilé (9) pour former une structure de renfort interne (8) tubulaire destinée à renforcer la conduite flexible (1) contre des efforts radiaux externes s'exerçant sur la conduite flexible (1), les spires adjacentes du feuillard profilé (9) étant agrafées, le feuillard profilé (9) délimitant au moins un interstice hélicoïdal (10),
(b) fournir autour de la structure de renfort interne (8), une gaine interne (6) de protection,
(c) fournir autour de la gaine interne (6) polymérique d'étanchéité, une structure de renfort externe (3) métallique destinée à renforcer la conduite flexible (1) contre des efforts radiaux internes et/ou des efforts de traction,
(d) fournir autour de la structure de renfort externe (3), une gaine externe (2) polymérique d'étanchéité destinée à limiter la pénétration de l'eau de l'étendue d'eau au sein de la conduite flexible (1), la gaine externe (2) et la gaine interne (6) délimitent un espace annulaire (7) dans lequel la structure de renfort externe (3) est agencée,
l'étape (a) comprenant en outre l'étape suivante : enrouler en hélice au moins un élément d'étanchéité (11) destiné à limiter le passage du fluide pétrolier et/ou gazier du passage interne vers l'espace annulaire (7) au sein de l'interstice hélicoïdal (10).

Par exemple, un feuillard précurseur est chargé sur une première bobine.

Avantageusement, le feuillard précurseur comprend un ou plusieurs orifices d'injection (25) et éventuellement de vérification.

L'élément d'étanchéité (11) est chargé sur une deuxième bobine.

Le feuillard précurseur est déroulé et introduit au sein d'une profileuse. Le feuillard précurseur est plié au sein de la profileuse pour former le feuillard profilé (9).

Puis, le feuillard profilé (9) est enroulé en hélice selon un pas court, avantageusement autour d'un mandrin. Par « pas court », il est entendu un angle d'hélice d'une valeur absolue comprise entre 70° et 90°, avantageusement de 85°. Le feuillard profilé (9) enroulé délimite un interstice hélicoïdal (10).

L'élément d'étanchéité (11) est déroulé et enroulé en hélice au sein de l'interstice hélicoïdal (10) simultanément à l'enroulement du feuillard profilé (9). Ceci facilite l'insertion de l'élément d'étanchéité (11) au sein de l'interstice hélicoïdal (10).

Les spires du feuillard profilé (9) sont ensuite agrafées par des organes de plaquage agencées autour du mandrin qui exercent une pression sur les spires du feuillard profilé (9).

Avantageusement, après cette étape, on réalise un ou des orifices d'injection (25) et éventuellement de vérification au travers du feuillard profilé (9). Selon un autre mode de réalisation, le ou les orifices d'injection (25) sont réalisés avant que le feuillard précurseur ne soit introduit au sein de la profileuse.

Autour de la structure de renfort interne (8), on forme la gaine interne (6). Par exemple, la gaine interne (6) est directement extrudée autour de la structure de renfort interne (8).

Puis, autour de la gaine interne (6) on dispose au moins une structure de renfort externe (3). Avantageusement, on dispose deux structures de renfort externe (3), par exemple, une voûte de pression (5) puis une paire de nappes d'armures de traction (4).

Par exemple, on charge un profil métallique sur une bobine. Puis on déroule et dispose le profil métallique en hélice autour de la gaine interne (6) selon un pas court pour former la voûte de pression (5). Par « pas court », il est entendu un angle d'hélice d'une valeur absolue comprise entre 70° et 90°, avantageusement de 85°.

On charge ensuite sur plusieurs bobines, des éléments d'armures (41) que l'on déroule et que l'on dispose simultanément en hélice selon un pas long autour de la voûte de pression (5) pour former la paire de nappes d'armures de traction (4). Par « pas long », il est entendu un angle d'hélice d'une valeur absolue comprise entre 20° et 60° et avantageusement entre 25° et 55°.

Ensuite, on forme la gaine externe (2). Par exemple, on extrude la gaine externe (2) directement autour de la paire de nappes d'armures de traction (4). Alternativement, on extrude des bandes puis on enroule lesdites bandes autour de la structure de renfort externe (3).

On forme ainsi l'espace annulaire (7) entre la gaine interne (6) et la gaine externe (2) dans lequel la structure de renfort externe (3) est agencée.

On forme ainsi une conduite flexible pour laquelle les risques de ruptures sont limités.

L'intégrité de la structure de renfort interne (8) selon l'invention est avantageusement testée en injectant un fluide, sous une pression généralement supérieure à la pression de service telle que déterminée notamment dans les documents normatifs de l'American Petroleum Institute, au sein de la structure de renfort (8) par exemple.

Le fluide est par exemple un liquide tel que de l'eau ou une huile. Le fluide est selon un autre mode de réalisation, un gaz tel que de l'air comprimé.

Le fluide peut être injecté après la réalisation de la structure de renfort interne (8). Des moyens d'étanchéité sont alors montés aux extrémités de la structure de renfort interne (8).

Selon un autre mode de réalisation, le fluide est injecté après la formation de la gaine interne (6). Selon ce mode de réalisation, le fluide est injecté au sein de la structure de renfort (8) ou au sein du volume compris entre la gaine interne (6) et la structure de renfort (8).

Selon un mode de réalisation, le volume compris entre la gaine interne (6) et la structure de renfort interne (8) est rempli d'un fluide tel que du méthanol ou de l'eau afin de réduire le différentiel de pression entre le passage interne de la conduite flexible (1) et l'extérieur de la conduite flexible (1). Le volume est rempli durant l'installation de la conduite flexible (1) au sein de l'étendue d'eau via des orifices localisés au sein des embouts de la conduite flexible (1) communiquant avec ledit volume ou pendant la fabrication de la conduite flexible (1).

Le remplissage de ce volume par l'eau de l'étendue d'eau durant l'installation de la conduite flexible (1) peut conduire à la corrosion de la structure de renfort interne (8). Pour limiter la corrosion tout en bénéficiant de l'équilibre de pression entre le passage interne et l'extérieur de la conduite flexible (1), un dispositif de désalinisation de l'eau de l'étendue d'eau est agencé dans les embouts par exemple. Le dispositif de désalinisation est par exemple un échangeur d'ions ou une membrane d'osmose inverse.

## Revendications

1. Conduite flexible (1) pour le transport d'un fluide pétrolier et/ou gazier destinée à être immergée au sein d'une étendue d'eau comprenant de l'extérieur vers l'intérieur de ladite conduite flexible (1) :
- une gaine externe (2) d'étanchéité destinée à limiter la pénétration de l'eau de l'étendue d'eau au sein de la conduite flexible (1),
- au moins une structure de renfort externe (3) destinée à renforcer la conduite flexible (1) contre des efforts radiaux internes et/ou des efforts de traction,
- une gaine interne (6) de protection,
- un espace annulaire (7) délimité par la gaine externe (2) et la gaine interne (6), la structure de renfort externe (3) étant agencée au sein dudit espace annulaire (7),
- une structure de renfort interne (8) tubulaire destinée à renforcer la conduite flexible (1) contre des efforts radiaux externes s'exerçant sur la conduite flexible (1) comprenant :
- un feuillard profilé (9), enroulé en hélice pour former la structure de renfort interne (8) tubulaire, les spires adjacentes dudit feuillard profilé (9) étant agrafées, ledit feuillard profilé (9) délimitant au moins un interstice hélicoïdal (10),
la structure de renfort interne (8) comprenant en outre :
- au moins un élément d'étanchéité (11) destiné à limiter le passage du fluide pétrolier et/ou gazier du passage interne vers l'espace annulaire (7), ledit élément d'étanchéité (11) étant enroulé en hélice au sein d'au moins un interstice hélicoïdal (10),
le feuillard profilé (9) présentant une section transversale comprenant :
- une première région d'extrémité (12) comprenant une extrémité libre d'appui inférieure (15), une branche d'appui supérieure (16) liée à l'extrémité libre d'appui inférieure (15) par une première branche de liaison transversale (17),
- une deuxième région d'extrémité (13) comprenant une branche d'appui inférieure (18), une extrémité libre d'appui supérieure (19) liée à la branche d'appui inférieure (18) par une deuxième branche de liaison transversale (20),
- une région centrale (14) comprenant une troisième branche transversale (21) liant la branche d'appui supérieure (16) de la première région d'extrémité (12) à la branche d'appui inférieure (18) de la deuxième région d'extrémité (13),
dans laquelle l'extrémité libre d'appui supérieure (19) de la deuxième région d'extrémité (13) d'une première spire est insérée entre l'extrémité libre d'appui inférieure (15) et la branche d'appui supérieure (16) de la première région d'extrémité (12) d'une spire adjacente pour former l'agrafage de la structure de renfort interne (8),
dans laquelle l'interstice hélicoïdal (10) est délimité radialement par la branche d'appui inférieure (18) de la deuxième région d'extrémité (13) de la première spire et par l'extrémité libre d'appui inférieure (15) de la première région d'extrémité (12) de la spire adjacente,
et /ou par l'extrémité libre d'appui supérieure (19) de la deuxième région d'extrémité (13) de la première spire et par l'extrémité libre d'appui inférieure (15) de la première région d'extrémité (12) de la spire adjacente,
et/ou par l'extrémité libre d'appui supérieure (19) de la deuxième région d'extrémité (13) de la première spire et par la branche d'appui supérieure (16) de la première région d'extrémité (12) de la spire adjacente,
**caractérisée en ce que** l'élément d'étanchéité présente une section transversale polygonale, ovale ou circulaire,
la structure de renfort interne (8) comprenant une résine d'étanchéité (24) destinée à améliorer l'étanchéité de la structure de renfort interne (8), la résine d'étanchéité (24) étant agencée au sein d'au moins une partie du volume d'un premier caisson d'une spire, le premier caisson étant refermé latéralement par la deuxième branche de liaison transversale (20) d'une spire adjacente, la résine d'étanchéité (24) étant de préférence injectée à l'état liquide par un orifice d'injection (25) réalisé à travers la superposition de la branche d'appui supérieure (16) de la première région d'extrémité (12) d'une spire et l'extrémité libre d'appui supérieure (19) d'une spire adjacente.

2. Conduite flexible (1) selon la revendication 1 **caractérisée en ce que** l'extrémité libre d'appui inférieure (15) de la première région d'extrémité (12) d'une spire comprend un premier tronçon (22) s'étendant de la première branche de liaison transversale (17) à un second tronçon (23) présentant une concavité dirigée vers la branche d'appui inférieure (18) de la deuxième région d'extrémité (13) de la spire adjacente.

3. Conduite flexible selon la revendication 2 **caractérisée en ce que** l'interstice hélicoïdal (10) est délimité radialement par la branche d'appui inférieure (18) d'une spire et par le second tronçon (23) de l'extrémité libre d'appui inférieure (15) d'une spire adjacente.

4. Conduite flexible (1) selon la revendication 1 **caractérisée en ce que** l'extrémité libre d'appui supérieure (19) de la deuxième région d'extrémité (13) d'une spire comprend un premier tronçon (22) s'étendant de la deuxième branche de liaison transversale (20) à un second tronçon (23) présentant une concavité dirigée vers la branche d'appui supérieure (16) de la première région d'extrémité (12) de la spire adjacente et **en ce qu'**un interstice hélicoïdal (10) est en outre délimité par ledit second tronçon (23) de l'extrémité libre d'appui supérieure (19) et par la branche d'appui supérieure (16) de la première région d'extrémité (12) d'une spire adjacente.

5. Conduite flexible (1) selon l'une des revendications précédentes **caractérisée en ce que** la structure de renfort interne (8) comprend une pluralité d'éléments d'étanchéité (11).

6. Conduite flexible (1) selon l'une des revendications précédentes **caractérisée en ce que** l'élément d'étanchéité (11) présente une section transversale ovale.

7. Conduite flexible (1) selon l'une des revendications 1 à 5 **caractérisée en ce que** l'élément d'étanchéité (11) présente une section transversale rectangulaire, l'élément d'étanchéité (11) présentant optionnellement une épaisseur inférieure ou égale à la moitié de l'épaisseur du feuillard profilé (9).

8. Conduite flexible (1) selon l'une quelconque des revendications précédentes **caractérisée en ce que** l'élément d'étanchéité (11) comprend un corps principal formé d'un matériau polymérique ou métallique.

9. Conduite flexible (1) selon la revendication 8 **caractérisée en ce que** le matériau polymérique est choisi parmi un thermoplastique ou un élastomère ou un élastomère thermoplastique.

10. Conduite flexible (1) selon la revendication 8 ou 9 **caractérisée en ce que** le matériau comprend des charges destinées à diminuer le coefficient de frottement entre l'élément d'étanchéité (11) et le feuillard profilé (9).

11. Conduite flexible (1) selon l'une quelconque des revendications précédentes **caractérisée en ce que** l'élément d'étanchéité (11) comprend un revêtement polymérique destiné à renforcer l'étanchéité dudit élément d'étanchéité (11) vis-à-vis du fluide pétrolier et/ou gazier.

12. Conduite flexible (1) selon l'une quelconque des revendications précédentes **caractérisée en ce que** l'élément d'étanchéité (11) comprend au moins un élément de renfort destiné à renforcer la résistance de l'élément d'étanchéité (11) vis-à-vis de la pression.

13. Conduite flexible (1) selon l'une quelconque des revendications précédentes **caractérisée en ce que** l'élément d'étanchéité (11) est fixé à au moins une partie du feuillard profilé (9), par collage par exemple.

## Patentansprüche

1. Flexible Leitung (1) für den Transport eines Öl- und/oder Gasfluids, die dazu bestimmt ist, in ein Gewässer eingetaucht zu werden, umfassend von der Außenseite zu Innenseite der flexiblen Leitung (1):
- eine äußere Dichtungshülle (2), die dazu bestimmt ist, das Eindringen von Wasser aus dem Gewässer in das Innere der flexiblen Leitung (1) zu begrenzen,
- mindestens eine äußere Verstärkungsstruktur (3), die dazu bestimmt ist, die flexible Leitung (1) gegen innere radiale Kräfte und/oder Zugkräfte zu verstärken,
- eine innere Schutzhülle (6),
- einen ringförmigen Raum (7), der von der äußeren Hülle (2) und der inneren Hülle (6) begrenzt ist, wobei die äußere Verstärkungsstruktur (3) innerhalb des ringförmigen Raums (7) angeordnet ist,
- eine rohrförmige innere Verstärkungsstruktur (8), die dazu bestimmt ist, die flexible Leitung (1) gegen externe radiale Kräfte, die auf die flexible Leitung (1) einwirken, zu verstärken, umfassend:
- ein profiliertes Band (9), das schraubenförmig gewickelt ist, um die rohrförmige innere Verstärkungsstruktur (8) zu bilden, wobei angrenzende Windungen des profilierten Bands (9) zusammengeheftet sind und das profilierte Band (9) mindestens einen schraubenförmigen Spalt (10) begrenzt,
die innere Verstärkungsstruktur (8) ferner umfassend:
- mindestens ein Dichtungselement (11), das dazu bestimmt ist,um den Durchgang von Öl- und/oder Gasfluid aus dem inneren Durchgang in den Ringraum (7) zu begrenzen, wobei das Dichtungselement (11) innerhalb mindestens eines schraubenförmigen Spalts (10) schraubenförmig gewickelt ist,
wobei das profilierte Band (9) einen Querschnitt aufweist, umfassend:
- einen ersten Endbereich (12), umfassend ein unteres freies Stützende (15), einen oberen Stützzweig (16), der durch einen ersten Querverbindungszweig (17) mit dem unteren freien Stützende (15) verbunden ist,
- einen zweiten Endbereich (13), umfassend einen unteren Stützzweig (18), ein oberes freies Stützende (19), das durch einen zweiten Querverbindungszweig (20) mit dem unteren Stützzweig (18) verbunden ist,
- einen mittleren Bereich (14), umfassend einen dritten Querschenkel (21), der den oberen Stützzweig (16) des ersten Endbereichs (12) mit dem unteren Stützzweig (18) des zweiten Endbereichs (13) verbindet,
wobei das obere freie Stützende (19) des zweiten Endbereichs (13) einer ersten Windung zwischen dem unteren freien Stützende (15) und dem oberen Stützzweig (16) des ersten Endbereichs (12) einer angrenzenden Windung eingefügt ist, um die Heftung der inneren Verstärkungsstruktur (8) zu bilden,
wobei der schraubenförmige Spalt (10) radial durch den unteren Stützzweig (18) des zweiten Endbereichs (13) der ersten Windung und durch das untere freie Stützende (15) des ersten Endbereichs (12) der angrenzenden Windung begrenzt ist,
und/oder durch das obere freie Stützende (19) des zweiten Endbereichs (13) der ersten Windung und durch das untere freie Stützende (15) des ersten Endbereichs (12) der angrenzenden Windung,
und/oder durch das obere freie Stützende (19) des zweiten Endbereichs (13) der ersten Windung und durch den oberen Stützzweig (16) des ersten Endbereichs (12) der angrenzenden Windung,
**dadurch gekennzeichnet, dass** das Dichtungselement einen polygonalen, ovalen oder kreisförmigen Querschnitt aufweist,
die innere Verstärkungsstruktur (8) umfassend ein Dichtungsharz (24), das dazu bestimmt ist die Dichtigkeit der inneren Verstärkungsstruktur (8) zu verstärken, wobei das Dichtungsharz (24) innerhalb mindestens eines Teils des Volumens eines ersten Kastens einer Windung angeordnet ist, wobei der erste Kasten seitlich durch den zweiten Querverbindungszweig (20) einer angrenzenden Windung geschlossen ist, wobei das Dichtungsharz (24) vorzugsweise in flüssigem Zustand durch eine Einspritzöffnung (25) eingespritzt wird, die durch die Überlagerung des oberen Stützzweigs (16) des ersten Endbereichs (12) einer Windung und des oberen freien Stützendes (19) einer angrenzenden Windung hindurch gebildet ist.

2. Flexible Leitung (1) nach Anspruch 1, **dadurch gekennzeichnet, dass** das untere freie Stützende (15) des ersten Endbereichs (12) einer Windung einen ersten Abschnitt (22) umfasst, der sich von dem ersten Querverbindungszweig (17) zu einem zweiten Abschnitt (23) erstreckt, der eine Konkavität aufweist, die zu dem unteren Stützzweig (18) des zweiten Endbereichs (13) der angrenzenden Windung gerichtet ist.

3. Flexible Leitung nach Anspruch 2, **dadurch gekennzeichnet, dass** der schraubenförmige Spalt (10) radial durch den unteren Stützzweig (18) einer Windung und durch den zweiten Abschnitt (23) des unteren freien Stützendes (15) einer angrenzenden Windung begrenzt ist.

4. Flexible Leitung (1) nach Anspruch 1, **dadurch gekennzeichnet, dass** das obere freie Stützende (19) des zweiten Endbereichs (13) einer Windung einen ersten Abschnitt (22) umfasst, der sich von dem zweiten Querverbindungszweig (20) zu einem zweiten Abschnitt (23) erstreckt, der eine Konkavität aufweist, die zu dem oberen Stützschenkel (16) des ersten Endbereichs (12) der benachbarten Windung gerichtet ist, unddass ein schraubenförmiger Spalt (10) ferner durch den zweiten Abschnitt (23) des oberen freien Stützendes (19) und durch den oberen Stützzweig (16) des ersten Endbereichs (12) einer angrenzenden Windung begrenzt ist.

5. Flexible Leitung (1) nach einem der vorherigen Ansprüche, **dadurch gekennzeichnet, dass** die innere Verstärkungsstruktur (8) eine Vielzahl von Dichtungselementen (11) umfasst.

6. Flexible Leitung (1) nach einem der vorherigen Ansprüche, **dadurch gekennzeichnet, dass** das Dichtungselement (11) einen ovalen Querschnitt aufweist.

7. Flexible Leitung (1) nach einem der Ansprüche 1 bis 5, **dadurch gekennzeichnet, dass** das Dichtungselement (11) einen rechteckigen Querschnitt aufweist, wobei das Dichtungselement (11) optional eine Stärke aufweist, die kleiner oder gleich der Hälfte der Stärke des Profilbands (9) ist.

8. Flexible Leitung (1) nach einem der vorherigen Ansprüche, **dadurch gekennzeichnet, dass** das Dichtungselement (11) einen Hauptkörper umfasst, der aus einem polymeren oder metallischen Material gebildet ist.

9. Flexible Leitung (1) nach Anspruch 8, **dadurch gekennzeichnet, dass** das polymere Material ausgewählt ist aus einem Thermoplast oder einem Elastomer oder einem thermoplastischen Elastomer.

10. Flexible Leitung (1) nach Anspruch 8 oder 9, **dadurch gekennzeichnet, dass** das Material Füllstoffe umfasst, die den Reibungskoeffizienten zwischen dem Dichtungselement (11) und dem profilierten Band (9) verringern sollen.

11. Flexible Leitung (1) nach einem der vorherigen Ansprüche, **dadurch gekennzeichnet, dass** das Dichtungselement (11) eine Polymerbeschichtung umfasst, die dazu bestimmt ist, die Dichtigkeit des Dichtungselements (11) gegenüber dem Öl- und/oder Gasfluid zu verstärken.

12. Flexible Leitung (1) nach einem der vorherigen Ansprüche, **dadurch gekennzeichnet, dass** das Dichtungselement (11) mindestens ein Verstärkungselement umfasst, um die Widerstandsfähigkeit des Dichtungselements (11) gegenüber Druck zu erhöhen.

13. Flexible Leitung (1) nach einem der vorherigen Ansprüche, **dadurch gekennzeichnet, dass** das Dichtungselement (11) an mindestens einem Teil des profilierten Bands (9) befestigt ist, beispielsweise durch Kleben.

## Claims

1. Flexible pipe (1) for transporting an oil and/or gas fluid intended to be immersed in a body of water comprising from the outside to the inside of said flexible pipe (1):
- an outer sealing sheath (2) designed to limit the penetration of water from the body of water into the flexible pipe (1),
- at least one external reinforcement structure (3) designed to reinforce the flexible pipe (1) against internal radial forces and/or tensile forces,
- an internal protective sheath (6),
- an annular space (7) delimited by the outer sheath (2) and the inner sheath (6), the external reinforcement structure (3) being arranged within said annular space (7),
- a tubular internal reinforcement structure (8) intended to reinforce the flexible pipe (1) against external radial forces exerted on the flexible pipe (1) comprising:
- a profiled strip (9), helically wound to form the tubular internal reinforcement structure (8), the adjacent coils of said profiled strip (9) being interlocked, said profiled strip (9) delimiting at least one helical gap (10),
the internal reinforcement structure (8) further comprising:
- at least one sealing element (11) designed to limit the passage of oil and/or gas fluid from the internal passage to the annular space (7), said sealing element (11) being helically wound within at least one helical gap (10),
the profiled strip (9) having a cross-section comprising:
- a first end region (12) comprising a lower bearing free end (15), an upper bearing limb (16) connected to the lower bearing free end (15) by a first transverse connecting limb (17),
- a second end region (13) comprising a lower bearing limb (18), an upper bearing free end (19) connected to the lower bearing limb (18) by a second transverse connecting limb (20),
- a central region (14) comprising a third transverse branch (21) connecting the upper bearing limb (16) of the first end region (12) to the lower bearing limb (18) of the second end region (13),
in which the upper bearing free end (19) of the second end region (13) of a first coil is inserted between the lower bearing free end (15) and the upper bearing limb (16) of the first end region (12) of an adjacent coil to form the interlock of the internal reinforcement structure (8),
in which the helical gap (10) is radially delimited by the lower bearing limb (18) of the second end region (13) of the first coil and by the lower bearing free end (15) of the first end region (12) of the adjacent coil,
and/or by the upper free bearing end (19) of the second end region (13) of the first coil and by the lower free bearing end (15) of the first end region (12) of the adjacent coil,
and/or by the upper bearing free end (19) of the second end region (13) of the first turn and by the upper bearing leg (16) of the first end region (12) of the adjacent coil,
**characterised in that** the sealing element has a polygonal, oval or circular cross-section,
the internal reinforcement structure (8) comprising a sealing resin (24) intended to improve the sealing of the internal reinforcement structure (8), the sealing resin (24) being arranged within at least part of the volume of a first casing of a coil, the first casing being closed laterally by the second transverse connecting limb (20) of an adjacent coil, the sealing resin (24) preferably being injected in the liquid state through an injection port (25) formed through the superposition of the upper bearing limb (16) of the first end region (12) of a coil and the upper free support end (19) of an adjacent coil.

2. Flexible pipe (1) according to claim 1, **characterised in that** the lower bearing free end (15) of the first end region (12) of a coil comprises a first section (22) extending from the first transverse connecting limb (17) to a second section (23) having a concavity directed towards the lower bearing limb (18) of the second end region (13) of the adjacent coil.

3. Flexible pipe according to claim 2, **characterised in that** the helical gap (10) is radially delimited by the lower bearing limb (18) of one coil and by the second section (23) of the lower bearing free end (15) of an adjacent coil.

4. Flexible pipe (1) according to claim 1, **characterised in that** the upper bearing free end (19) of the second end region (13) of a coil comprises a first section (22) extending from the second transverse connecting limb (20) to a second section (23) having a concavity directed towards the upper bearing limb (16) of the first end region (12) of the adjacent coil, and **in that** a helical gap (10) is further delimited by the said second section (23) of the upper bearing free end (19) and by the upper bearing limb (16) of the first end region (12) of an adjacent coil.

5. Flexible pipe (1) according to one of the preceding claims, **characterised in that** the internal reinforcement structure (8) comprises a plurality of sealing elements (11).

6. Flexible pipe (1) according to one of the preceding claims, **characterised in that** the sealing element (11) has an oval cross-section.

7. Flexible pipe (1) according to one of claims 1 to 5, **characterised in that** the sealing element (11) has a rectangular cross-section, the sealing element (11) optionally having a thickness less than or equal to half the thickness of the profiled strip (9).

8. Flexible pipe (1) according to any one of the preceding claims, **characterised in that** the sealing element (11) comprises a main body formed from a polymeric or metallic material.

9. Flexible pipe (1) according to claim 8, **characterised in that** the polymeric material is chosen from a thermoplastic or an elastomer or a thermoplastic elastomer.

10. Flexible pipe (1) according to claim 8 or 9, **characterised in that** the material comprises fillers intended to reduce the coefficient of friction between the sealing element (11) and the profiled strip (9).

11. Flexible pipe (1) according to any one of the preceding claims, **characterised in that** the sealing element (11) comprises a polymeric coating intended to reinforce the sealing of the said sealing element (11) with respect to the oil and/or gas fluid.

12. Flexible pipe (1) according to any one of the preceding claims, **characterised in that** the sealing element (11) comprises at least one reinforcing element intended to reinforce the resistance of the sealing element (11) to pressure.

13. Flexible pipe (1) according to any one of the preceding claims, **characterised in that** the sealing element (11) is fixed to at least part of the profiled strip (9), by gluing for example.
